# FASCICULE DE BREVET EUROPEEN

(11) **EP 3 481 644 B1**
(45) Date de publication et mention de la délivrance du brevet: **08.01.2025**
(21) Numéro de dépôt: 17745828.8
(22) Date de dépôt: 04.07.2017
(51) Int. Cl.: B60B 7/00, B60C 15/02, B60B 7/06, B60B 7/08, B60B 7/01, B60B 7/02, B60B 7/14, B60B 21/10, B60B 21/12

(54) **ENJOLIVEUR FLEXIBLE POUR ROUE DE VEHICULE A SIEGE FLOTTANT, ET ROUE A SIEGE FLOTTANT EQUIPEE D'UN ENJOLIVEUR FLEXIBLE**
FLEXIBLE RADKAPPE FÜR EIN FAHRZEUGRAD MIT EINEM SCHWEBESITZ UND RAD MIT EINEM SCHWEBESITZ UND EINER FLEXIBLEN RADKAPPE
FLEXIBLE HUB CAP FOR A VEHICLE WHEEL HAVING A FLOATING SEAT, AND WHEEL HAVING A FLOATING SEAT AND A FLEXIBLE HUB CAP

(30) Priorité: 08.07.2016 FR 1656593
(43) Date de publication de la demande: 15.05.2019
(73) Titulaire: Maxion Wheels Holding GmbH, 53639 Königswinter (DE)
(72) Inventeur: WALSER, Daniel, 63040 CLERMONT-FERRAND CEDEX 9 (FR); EBEL, Benjamin Edward, 63040 CLERMONT-FERRAND CEDEX 9 (FR); DUNING, Ralf, D-42719 Solingen (DE); VITS, Johan, B010 - 2530 Boechout (BE)
(74) Mandataire: Patentanwälte Buschhoff Hennicke Althaus
(86) Numéro de dépôt international: PCT/FR2017/051816
(87) Numéro de publication internationale: WO 2018/007750

(56) Documents cités:
- WO-A1-00/24595
- WO-A1-2016/046197
- DE-A1- 102012 207 911
- DE-A1- 3 328 519
- DE-A1- 4 301 778
- DE-U1- 8 521 828

## Description

### Domaine de l'invention

L'invention a pour objet un enjoliveur pour une roue de véhicule dont le siège destiné à recevoir le bourrelet de pneumatique est flottant radialement. L'invention concerne notamment les ensembles comportant un adaptateur flexible inséré entre un bourrelet de pneumatique et une jante.

Un pneumatique, une jante, un adaptateur, dont il est question dans la présente invention, sont des objets usuellement décrits par une représentation dans un plan méridien, c'est-à-dire un plan contenant un axe de rotation, l'axe de rotation du pneumatique. Les directions radiale et axiale désignent les directions, respectivement, perpendiculaire à l'axe de rotation du pneumatique et parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ».

### État de la technique

De façon générale, un pneumatique comprend une bande de roulement, destinée à entrer en contact avec un sol, deux flancs prolongeant radialement vers l'intérieur les extrémités axiales de la bande de roulement et deux bourrelets prolongeant radialement vers l'intérieur les deux flancs et destinés à entrer en contact avec une jante.

Dans le document WO2016/046197, il est proposé d'insérer un adaptateur élastique entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux adaptateurs identiques. En considérant les conventions de langage rappelées ci-dessus, et en se reportant à la façon dont on monte sur une jante un tel adaptateur, un tel adaptateur comprend, axialement de l'intérieur vers l'extérieur, une extrémité axialement intérieure destinée à assurer l'accrochage de l'adaptateur sur la jante. Un tel adaptateur comprend aussi une extrémité axialement extérieure destinée à recevoir un bourrelet de pneumatique. Un corps flexible relie les deux extrémités respectivement axialement intérieure et axialement extérieure. Une telle roue est à siège flottant. Elle comporte une jante dont les extrémités axiales, là où se trouvent les sièges de pneumatique, peuvent se déplacer essentiellement radialement en cas de très forte sollicitation par une force orientée radialement vers l'axe de rotation de la roue. Pour fixer les idées, signalons que l'on considère qu'un siège est « flottant » si, en écrasant l'ensemble monté sur sol plan, la flèche de la roue est supérieure à 2,5 mm/T (millimètres par tonne), et préférentiellement supérieure à 3,2 mm/T.

L'intérêt de monter un pneumatique sur une roue à siège flottant est de rendre le pneumatique plus insensible à un choc violent tel qu'un choc contre un trottoir par exemple. Cela autorise un déplacement supplémentaire du bourrelet de pneumatique lié au débattement autorisé par le siège flottant. On comprend aisément que plus la course offerte au pneumatique est grande, plus grande est son insensibilité au choc. Et ceci d'autant plus que l'espace pouvant accueillir ce débattement est important. Il ne faut donc pas que la partie rigide de la roue vienne contrarier ce débattement.

Or dans le domaine industriel des roues et de leurs enjoliveurs, la plupart de ces objets sont rigides, non flexibles. Seul le pneumatique apporte la capacité de se déformer pour contribuer, avec la suspension du véhicule, à absorber les irrégularités de la route. Les roues sont entièrement rigides aux sollicitations de service, « entièrement » signifiant qu'elles sont rigides jusqu'au rebord de jante. Lorsqu'une roue comporte un enjoliveur, celui-ci est également rigide, ou en tout cas il ne subit pas de déformations imposées par son utilisation.

L'état de la technique connait aussi des enjoliveurs dont une partie est flexible parce qu'elle est conçue pour coopérer avec le pneumatique. On consultera par exemple les documents DE 43 01 778 A1, DE 8521828 U1, DE 9204216 U1, DE 4301778 A1 ou US 5511857.

Revenant à la catégorie des roues à siège flottant, il faut que le volume sous l'extrémité de jante, sous le siège, ne comporte aucun obstacle s'opposant fonctionnellement aux déformations recherchées lorsque l'on utilise une telle roue à siège flottant. C'est-à-dire qu'il faut un vide fonctionnel. Or ce vide fonctionnel crée une contrainte de design, l'oeil s'attachant à la partie métallique de la roue qui contraste avec l'adaptateur et le pneumatique, qui sont en caoutchouc, donc de couleur noire. Les conséquences de la présence d'adaptateurs ne vont pas dans le sens du design actuel des roues. En effet, la tendance actuelle est d'avoir, visuellement, une roue la plus grande possible et parfois aussi d'avoir des roues « full face », c'est-à-dire des roues ne présentant pas de décrochement visuel sous les crochets de jantes, mais au contraire présentant une surface presque plane entre flanc du pneumatique et disque de roue.

Se pose donc le problème de trouver le moyen technique de combler ce vide fonctionnel au moins pour la perception visuelle, afin d'apporter aux ensembles pneumatiques montés sur roue à siège flottant une meilleure esthétique.

### Description brève de l'invention

L'invention se rapporte à un enjoliveur de roue pour pneumatique, destiné à être utilisé avec une roue à siège de pneumatique flottant, ladite roue ayant un axe de rotation, ladite roue comprenant une partie centrale rigide comportant une portée de montage et comprenant une partie périphérique rigide, ladite partie centrale étant reliée à la partie périphérique de façon rigide, ladite partie périphérique ayant un centre de jante, le centre de jante étant prolongé axialement par des parties latérales de jante, chaque partie latérale de jante comportant un siège de pneumatique prolongé axialement vers l'extérieur par un rebord, au moins un des sièges de pneumatique étant flottant radialement.

L'invention a pour objet un enjoliveur comportant les caractéristiques de la revendication 1.

Ainsi, grâce à une distance suffisante, soit radialement, soit axialement, soit radialement et axialement, il existe un secteur intermédiaire, par ailleurs aussi construit de façon à ce qu'il soit déformable aux sollicitations de service, ledit secteur intermédiaire étant disposé entre ladite périphérie extérieure et les éléments de fixation dudit bord central assurent la fixation sur la partie rigide de la roue, de façon à ce que la périphérie extérieure puisse être déplacée au moins radialement vers l'intérieur par rapport au bord central. Dès lors, l'enjoliveur peut rester solidaire de la roue et s'accommoder des déplacements de sa périphérie qui coopère avec la partie flottante radialement de la roue.

La roue à siège flottant, dans sa partie rigide, peut être réalisée de toutes les manières convenables pour roue classique, c'est-à-dire pour roue entièrement rigide aux sollicitations de service, comme par exemple en tôle emboutie, en alliage léger, en matière composite ou combinant l'une ou l'autre des technologies énoncées ci-dessus. La portée de montage permet le montage de la roue sur un moyeu, directement ou au moyen de pièces intermédiaires (elles aussi, rigides). La portée de fixation sur un moyeu est du côté axialement intérieur de la roue, l'enjoliveur étant monté du côté axialement extérieur. Dans sa partie flottante, ladite roue peut par exemple être réalisée comme expliqué dans la demande de brevet WO2016/046197 précitée.

L'invention permet de multiples variantes de dessins combinés de partie rigide de roue et enjoliveur rapporté qui permettent de créer un objet final (roue à siège flottant) dont l'esthétique est similaire à celle des roues rigides, notamment des roues en alliage léger devenues très populaires pour les véhicules de tourisme.

Les éléments de fixation sur la partie centrale rigide de la roue assurent une fixation amovible, au moyen de vis par exemple ou tout autre moyen de fixation équivalent, ce qui permet de remplacer facilement l'enjoliveur par exemple pour faire évoluer le design de la roue ou pour faciliter l'opération de montage des adaptateurs (partie flexible de la jante) ou du pneumatique. Bien entendu, l'homme du métier peut faire appel à d'autres moyens de fixation, par exemple par clipsage, ou même rivets dont on peut aussi considérer qu'ils réalisent une fixation amovible puisqu'ils peuvent être percés pour démonter les pièces ainsi assemblées. En plus, le fait d'accrocher l'enjoliveur selon l'invention à la roue lui confère une position stable, n'engendrant pas de vibration lors d'un roulage. Du côté opposé fonctionnellement à la fixation sur la roue, l'enjoliveur peut affleurer ou s'appuyer sur une partie prévue à cet effet de l'adaptateur et peut présenter un profil et une élasticité tels qu'en cas de choc contre un trottoir, le cache peut se déformer et laisser fléchir l'extenseur portant le pneu.

### Description des Figures

L'invention est décrite ci-après à l'aide des figures 1 à 4, parmi lesquelles :
- la figure 1 est une perspective montrant un enjoliveur selon l'invention et une jante et deux adaptateurs avec lesquels il est utilisé,
- la figure 2 une perspective montrant un ensemble formé par les pièces apparaissant à la figure 1 assemblées pour former une roue à jante élastique et son enjoliveur,
- la figure 3 est une vue de côté, selon la direction de l'axe de rotation, montrant partiellement l'ensemble de la figure 2 sur lequel est monté un pneumatique,
- la figure 4 est une coupe radiale selon IV-IV à la figure 3,
- la figure 5 est une coupe radiale montrant une variante de réalisation d'un enjoliveur non confome à l'invention et, partiellement, une roue à siège de pneumatique flottant et un pneumatique,
- la figure 6 est une coupe radiale montrant une deuxième variante de réalisation d'un enjoliveur selon l'invention et, partiellement, une roue à de pneumatique flottant et un pneumatique,
- la figure 7 est une coupe radiale montrant une autre variante de réalisation d'un enjoliveur non confome à l'invention et, partiellement, une roue à siège de pneumatique flottant et un pneumatique,
- la figure 8 est une coupe radiale montrant une autre variante de réalisation d'un enjoliveur non confome à l'invention et, partiellement, une roue à de pneumatique flottant et un pneumatique.

### Description détaillée de l'invention

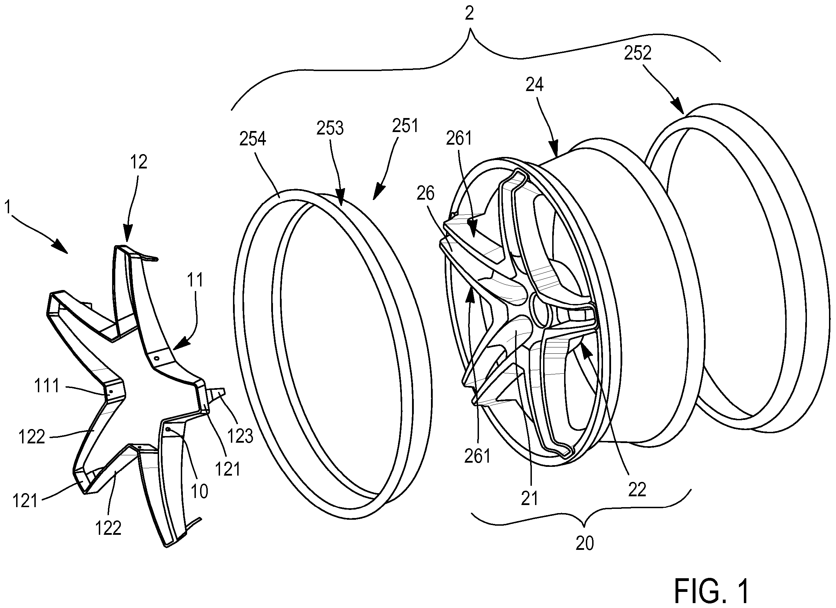

A la figure 1, on voit un enjoliveur 1 et une roue à siège flottant 2. La roue à siège flottant 2 est formée par l'assemblage d'une base-roue 20 rigide et de deux parties latérales de jante 251 et 252 toutes deux flexibles. Chaque partie latérale de jante comporte un siège de pneumatique 253 prolongé axialement vers l'extérieur par un rebord 254. Dans ce mode de réalisation, chacune des parties latérales de jante reprend l'enseignement indiqué pour l'adaptateur dans le document WO2016/046197 ; chaque partie latérale de jante est réalisée en élastomère renforcé permettant le déplacement selon une direction radiale du rebord 254 par rapport à l'extrémité opposée de ladite partie latérale de jante. La base-roue 20 rigide est une pièce en général monobloc, comportant une partie centrale 21 rigide et une partie périphérique 23 rigide reliées de façon rigide par une pluralité de rayons 26 ; chaque rayon 26 présente deux faces latérales 261 sensiblement parallèles entre elles et sensiblement parallèles à un plan contenant l'axe de rotation de la roue. La partie centrale 21 comporte une portée de fixation 22 sur un moyeu, définissant un côté axialement intérieur de la roue. La partie périphérique 23 présente une zone centrale formant le centre de jante 24.

En variante, la roue à siège flottant pourrait aussi comporter des parties latérales de jante flexibles montées de diverses manières, comme par exemple selon l'un ou l'autre des exemples données dans le document WO2015/086662, toutes choses équivalentes en ce qui concerne la présente invention qui trouve à s'appliquer dès lors que la roue comporte des sièges flottants, quels que soient les modes de réalisation de la partie flexible de la roue.

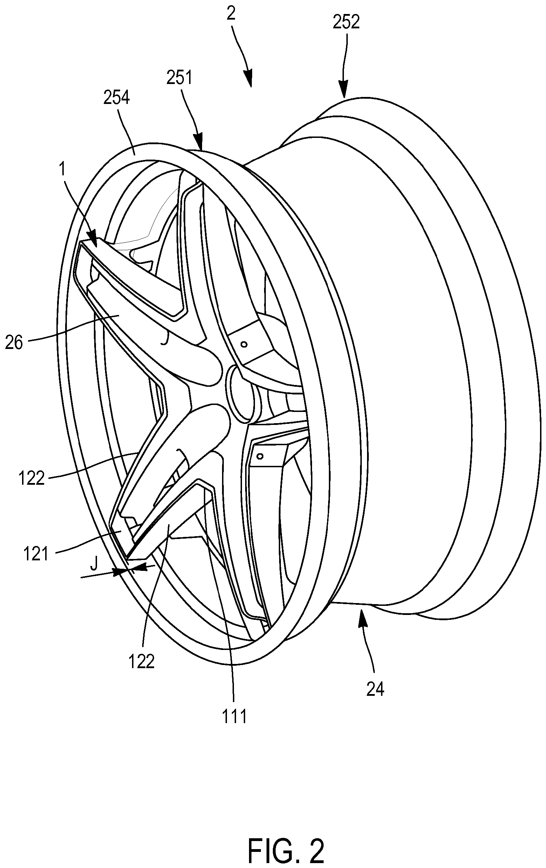

Quant à l'enjoliveur 1, on voit qu'il a l'allure générale d'une étoile comportant un bord central 11 et une périphérie extérieure 12. Le bord central 11 est formé par une pluralité de segments intérieurs 111. La périphérie extérieure 12 est comporte une pluralité de segments extérieurs 121 formant des arcs de cercles contenus sur un cercle circonscrit radialement à l'extérieur. Les segments intérieurs 111 du bord central 11 comportent des perçages permettant de recevoir des vis formant éléments de fixation sur la partie rigide de la roue. La périphérie extérieure 12 est agencée pour coopérer avec jeu fonctionnel J par rapport à ladite partie latérale de jante 251 (voir figure 2).

A la figure 1, on voit que la base-roue 20 ressemble à une roue en alliage léger classique, avec toutefois un déport de disque plus important qu'à l'accoutumée. Ceci est dû au fait que, sur les sièges, ce n'est pas directement un pneumatique que l'on monte, mais les adaptateurs que forment les parties latérales de jante 251, 252 flexibles. Le déport est dimensionné pour que les faces axialement extérieures des rayons 26 soient sensiblement coplanaires avec la face axialement extérieure du rebord 254.

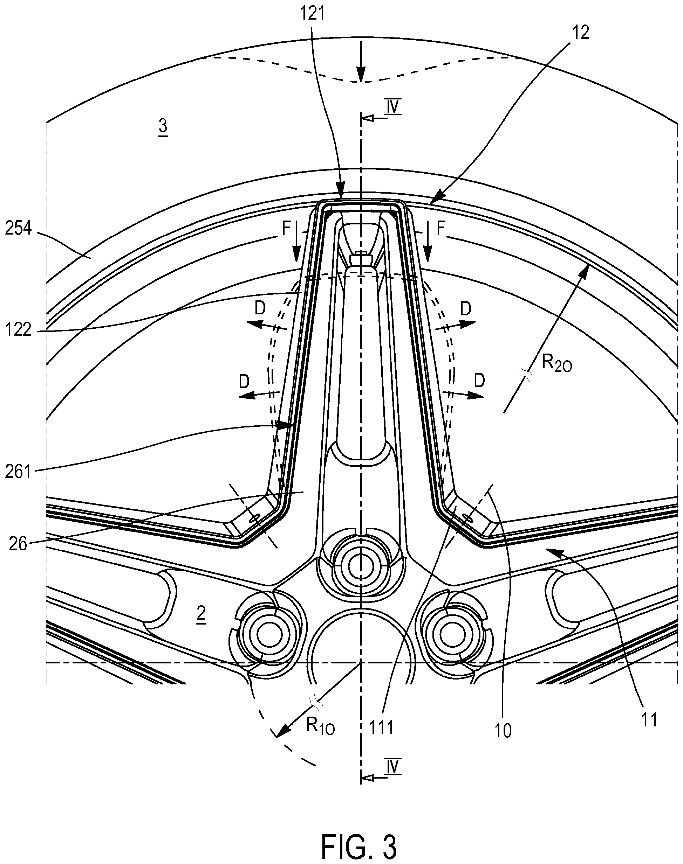

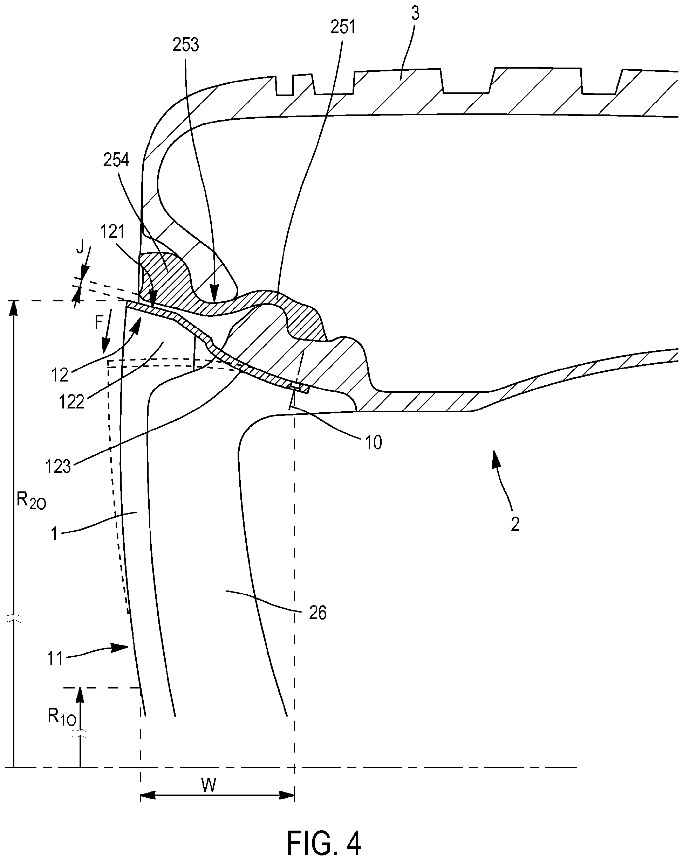

Revenons à l'enjoliveur 1. La périphérie extérieure 12 comporte une pluralité de segments extérieurs 121 formant des arcs de cercles contenus sur le cercle circonscrit radialement extérieur. La périphérie extérieure 12 a une forme de révolution quasi parallèle à, en position de montage, la face radialement intérieure de partie latérale de jante 251 axialement à l'extérieur, en regard du rebord 254 (voir figure 3). Les segments extérieurs 121 sont prolongés axialement vers l'intérieur par des pattes 123 (voir figure 4). Les pattes sont déformables ; elles ont une longueur suffisante pour accompagner par leur flexion le déplacement radial imposé à la périphérie extérieure 12. Les pattes 123 comportant des perçages permettant d'insérer des vis formant éléments de fixation sur la partie rigide de la roue.

Les segments extérieurs 121 sont reliés au bord central 11 par au moins un bras 122 déformable, en l'occurrence dans l'exemple que la figure 1 illustre, par deux bras 122 déformables, agencés pour encadrer les deux faces latérales 261 sensiblement parallèles des rayons 26 de la roue. Deux bras 122 sont connectés à chaque segment extérieur 121, de chaque côté de chaque segment extérieur dans le sens circonférentiel. La patte 123 prolonge chaque segment par le bord axialement intérieur de celui-ci. Le bord central 11 comporte des segments intérieurs 111 reliés chacun à deux bras 122 déformables, ceux-ci étant issus de segments extérieurs 121 différents, lesdits deux bras 122 étant connectés au segment extérieur 121 qu'ils relient de chaque côté dudit segment intérieur dans le sens circonférentiel.

Les figures 3 et 4 montrent un pneumatique 3 monté sur une roue à siège flottant 2 équipé de son enjoliveur 1. Le lecteur reconnaitra tous les éléments précédemment décrits. En outre, sur ces figures, on voit que le bord central est situé à un rayon R_{1O} et que la périphérie extérieure 12 est située à un rayon R_{2O}. Dans cette mise en oeuvre, l'enjoliveur 1 est conforme à l'arrangement suivant : le cercle R_{1O} vaut 30% de R_{2O}. Aux mêmes figures, l'enjoliveur est représenté en traits continu dans son état non déformé, tel qu'il apparait aux figures 1 et 2. Il est aussi représenté à l'état déformé, en traits discontinus. On voit en particulier que, si le pneumatique 3 heurte un obstacle important, comme une bordure de trottoir abordée à une vitesse significative, parce que ladite partie latérale de jante 251 va fléchir radialement vers l'intérieur (la flexion de la partie latérale de jante n'est pas représentée pour ne pas surcharger les dessins), le jeu J va être immédiatement annulé et ladite partie latérale de jante 251 va imposer à au moins un segment extérieur 121 une déformation F radialement vers l'intérieur comme représenté en traits discontinus aux figures 3 et 4. L'enjoliveur 1 est capable d'absorber cette déformation par le flambement des bras 122, comme illustré par le déplacement circonférentiel D visible à la figure 3. En indiquant que les bras 122 sont déformables, on signifie qu'ils sont réalisés en matériau permettant de les faire flamber sans déformation permanente. Remarquons qu'une telle déformation ne survient pas à chaque tour de roue en conditions normales, mais seulement lorsque le pneumatique subit un choc important comme en sortie de nid-de-poule, et que dans ce cas, seul un secteur de la roue va subir une déformation, donc normalement un ou éventuellement deux paires de bras 122.

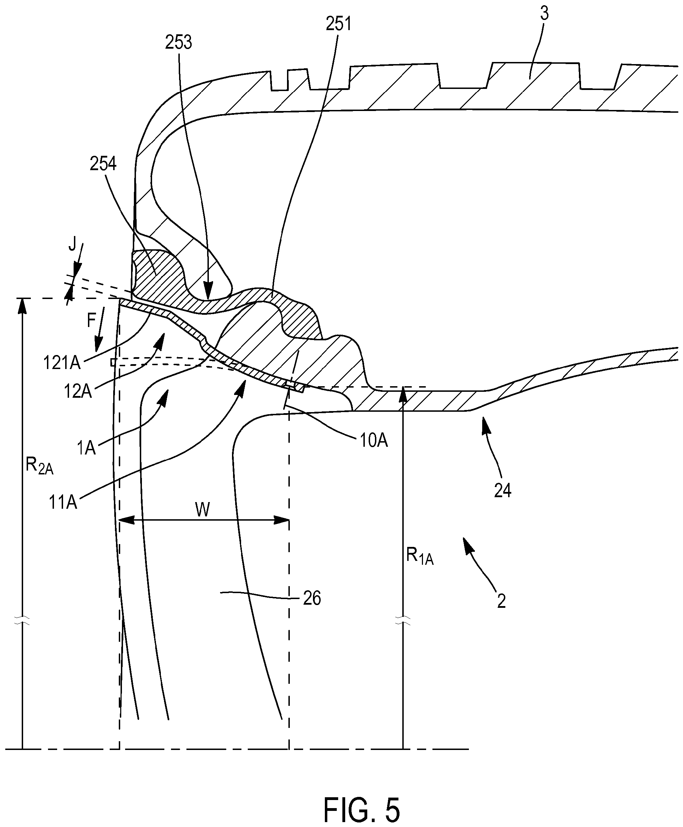

La figure 5 est une coupe radiale qui n'est pas comprise dans l'invention montrant une variante de réalisation d'un enjoliveur 1A ayant l'allure générale d'un tronc de cône, dont le diamètre extérieur est proche du diamètre de siège du bourrelet de pneumatique, et dont le diamètre intérieur est proche du diamètre de la partie centrale de la jante. Les parties semblables portent les mêmes références numériques, avec adjonction du suffixe « A », ce qui fait qu'il n'est pas utile de les décrire à nouveau en totalité. Le bord central 11A est radialement assez proche de la périphérie extérieure 12A. Le bord central 11A est interrompu pour enjamber les rayons 26. L'enjoliveur 1A est destiné à être fixé par des vis 10A sur la partie rigide de la roue 2 formant le bord axialement extérieur sur lequel est aménagé un siège pour monter la partie latérale flexible 251. Dans cette mise en oeuvre, l'enjoliveur 1A est conforme à l'arrangement suivant : la périphérie extérieur 12A est écartée axialement du plus proche 10A des éléments de fixation sur la roue d'une valeur W qui vaut 24% de R_{2A}. La périphérie extérieure 12A est agencée pour coopérer avec jeu fonctionnel J par rapport à ladite partie latérale de jante 251. En cas de forte sollicitation F imposant le déplacement radial de la périphérie extérieure 12A, l'enjoliveur 1A prend l'allure représentée en traits discontinus. Remarquons que le cercle R_{1A} vaut 85% de R_{2A}.

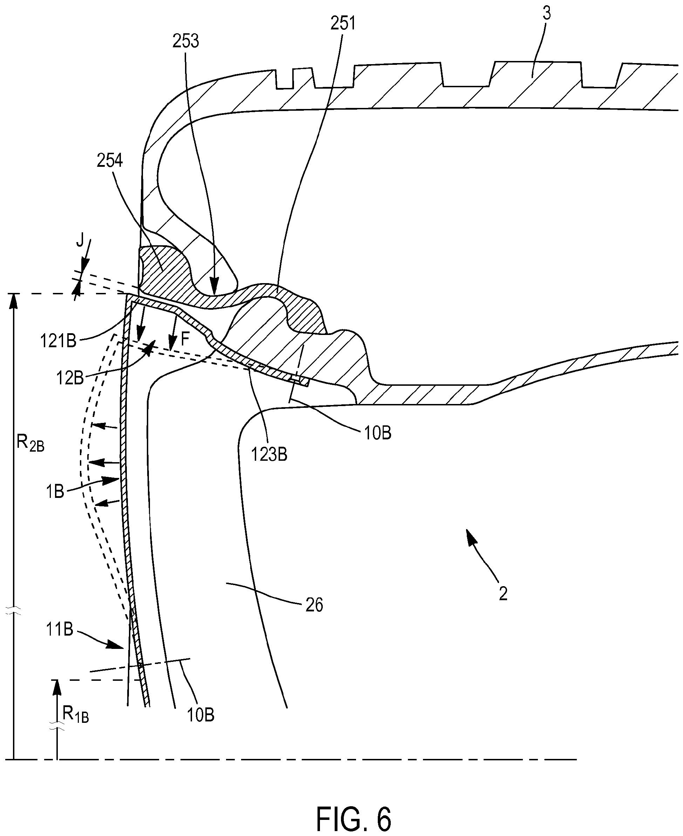

La figure 6 est une coupe radiale montrant une deuxième variante de réalisation d'un enjoliveur 1B dont la partie radialement extérieure ressemble au mode de réalisation décrit avec les figures 1 à 4. Les parties semblables portent les mêmes références numériques, avec adjonction du suffixe « B », ce qui fait qu'il n'est pas utile de les décrire à nouveau en totalité. Chaque segment extérieur 121B est connecté, par son bord axialement extérieur, à un bras 122B disposé axialement à l'extérieur de la face axialement extérieure de chaque rayon 26. L'extrémité radialement intérieure de l'ensemble des bras 122B forme le bord central 11B de l'enjoliveur 1B, les bras 122B étant déformables. Les extrémités radialement intérieures des bras 122B forment le bord central 11B de l'enjoliveur 1B ; elles comportent des perçages permettant de recevoir des vis 10B formant éléments de fixation sur la partie rigide de la roue. On notera que dans cette mise en oeuvre, l'enjoliveur 1B est également conforme à l'arrangement suivant : le cercle R_{1B} vaut 33% de R_{2B}. La périphérie extérieure 12B est agencée pour coopérer avec jeu fonctionnel J par rapport à ladite partie latérale de jante 251. En cas de forte sollicitation F imposant le déplacement radial de la périphérie extérieure 12B, l'enjoliveur 1B prend l'allure représentée en traits discontinus, avec déformation des pattes 123B et des bras 122B, ces derniers par déplacement axial R d'autant plus grand que l'on est à mi-hauteur radiale des bras 122B (à matière isotrope et section constante de ceux-ci).

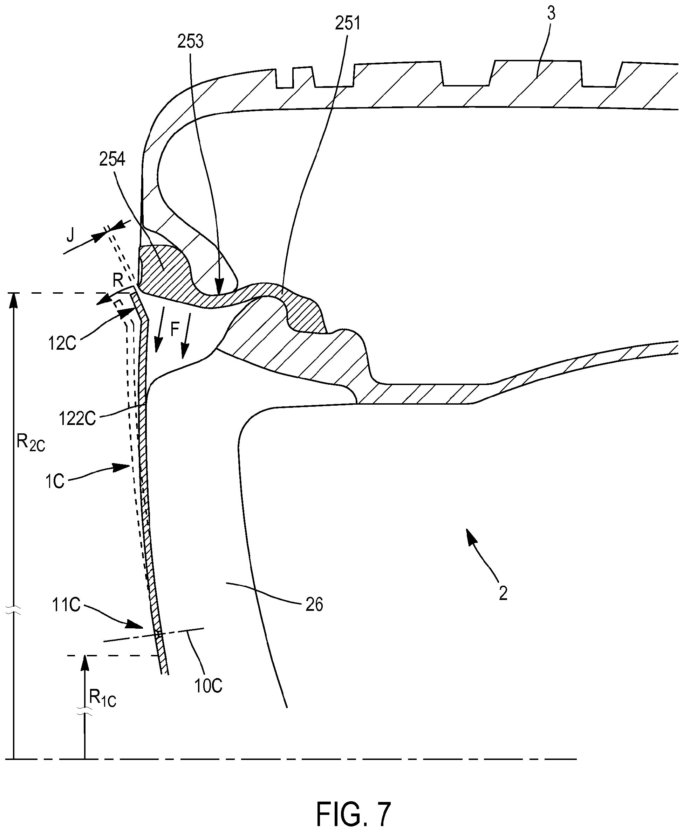

La figure 7 est une coupe radiale montrant une autre variante de réalisation d'un enjoliveur 1C qui n'est pas comprise dans l'invention . Celui-ci peut prendre l'allure d'un disque, percé ou non en partie centrale ; il peut aussi prendre l'allure d'un ensemble de bras 122C semblables aux bras 122B. Les parties semblables portent les mêmes références numériques, avec adjonction du suffixe « C », ce qui fait qu'il n'est pas utile de les décrire à nouveau en totalité. L'extrémité radialement intérieure de l'ensemble des bras 122C (ou du disque) forme le bord central 11C de l'enjoliveur 1C. Les bras 122C sont déformables (ou le disque est déformable). Le bord central 11C comporte des perçages permettant de recevoir des vis 10C formant éléments de fixation sur la partie rigide de la roue. On notera à nouveau que dans cette mise en oeuvre, l'enjoliveur 1C est également conforme à l'arrangement suivant : le cercle R_{1C} vaut 30% de R_{2C}. Notons que, en fonction de la taille de la roue, des choix de matériaux, une plage appropriée de valeur pour R_{1C} est de 30% à 65% de R_{2C}. La périphérie extérieure 12C (continue circonférentiellement ou non) est agencée pour, à l'état libre de toute contrainte, enjoliveur 1C monté sur roue 2, être légèrement déportée axialement par rapport au rebord 254, avec jeu fonctionnel J. En cas de forte sollicitation F imposant le déplacement radial du rebord 254, la périphérie extérieure 12C est repoussée axialement vers l'extérieur et prend l'allure représentée en traits discontinus, avec déformation des bras 122C (ou du disque s'il s'agit d'un disque plein).

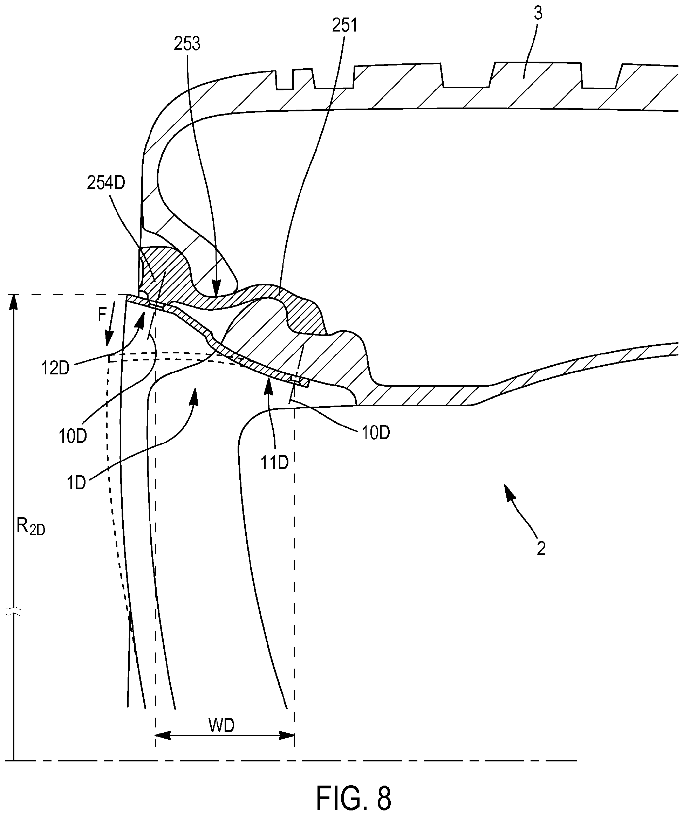

La figure 8 est une autre coupe radiale qui n'est pas comprise dans l'invention montrant une quatrième variante de réalisation d'un enjoliveur 1D selon l'invention dans laquelle la périphérie extérieure 12D de l'enjoliveur 1D comporte des éléments de fixation 10D, par exemple des vis, sur la partie flottante de la roue, c'est-à-dire sur le rebord 254D, lequel comprend une partie filetée femelle correspondante ou toute disposition équivalente, selon le moyen de fixation utilisé. Les parties semblables portent les mêmes références numériques, avec adjonction du suffixe « D », ce qui fait qu'il n'est pas utile de les décrire à nouveau en totalité. Dans cette mise en oeuvre, l'enjoliveur 1D est conforme à l'arrangement suivant : la périphérie extérieure 12D est écartée axialement du plus proche 10D des éléments de fixation sur la roue d'une valeur WD qui vaut 24% de R_{2D}, WD étant mesurée entre les points de fixation positive d'un côté sur la partie rigide de la roue et de l'autre sur la partie flottante de la roue car c'est ce qui compte d'un point de vue fonctionnel pour autoriser les déformations élastiques. Les autres éléments sont comparables à ce qui a été décrit ci-dessus (les références à des parties similaires ou identiques étant désignés au dessin par les mêmes chiffres portant cette fois le suffixe D et ne nécessitent pas d'explication supplémentaire.

L'invention se prête à de multiples variations ; elle ouvre un champ de conception neuf pour l'utilisation de roues à jante flottante ; parmi des variations possibles et intéressantes, citons la possibilité d'intégrer à l'enjoliveur selon l'invention un indicateur de choc subi au-delà d'un certain seuil, qui va résulter par exemple en une déformation permanente visible d'une partie de l'enjoliveur, ou une rupture locale de celui-ci ou la perte de celui-ci.

Enfin, signalons encore que l'invention s'étend à un ensemble comportant un enjoliveur 1, 1E selon l'invention et une roue 2 à siège flottant.

## Revendications

1. Enjoliveur (1) de roue (2) à siège flottant pour pneumatique, la roue étant formée par l'assemblage d'une base-roue (20) rigide et de deux parties latérales de jante (251, 252) flexibles comportant un siège (253) de pneumatique muni d'un rebord (254), ledit enjoliveur comportant :
• un bord central (11, 11B) situé à un rayon Ricomportant des éléments de fixation sur la roue,
• une périphérie extérieure (12, 12B) inscrite sur un cercle de rayon R₂, **caractérisé en ce que** la périphérie extérieure (12, 12B) est agencée pour être apte à coopérer avec un jeu fonctionnel « J » par rapport à une partie latérale de jante (251) et **en ce que**:
• la périphérie extérieure (12, 12B) comporte une pluralité de segments extérieurs (121) formant des arcs de cercles contenus sur un cercle circonscrit radialement extérieur au bord central (11, 11B), lesdits segments extérieurs (121) présentent une forme de révolution apte à être quasi parallèle à, en position de montage, la face radialement intérieure de ladite partie latérale de jante (251) axialement à l'extérieur, en regard du rebord (254),les segments extérieurs (121) sont déplaçables radialement,
• les segments extérieurs (121) sont reliés au bord central (11) par au moins un bras (122) déformable,
• les segments extérieurs (121) sont prolongés axialement vers l'intérieur par des pattes déformables (123), les pattes (123) comportant des éléments de fixation (10, 10B) sur la partie rigide de la roue,
et en enc e que ledit bord central (11, 11B) et ladite périphérie extérieure (12, 12B) sont conformes à l'un au moins des arrangements choisis parmi les deux arrangements suivants :
• la périphérie extérieure (12, 12B) est écartée axialement du plus proche des éléments de fixation sur la roue d'une valeur supérieure à 10% de rayon R₂,
• le cercle de rayon R₁ vaut au maximum 90% de rayon R₂.

2. Enjoliveur selon la revendication 1, pour roue à siège flottant, dont la partie rigide comporte une pluralité de rayons (26) reliant la partie centrale (21) rigide et la partie périphérique (23) rigide, chaque rayon (26) ayant deux faces latérales (261) sensiblement parallèles entre elles et sensiblement parallèles à un plan contenant l'axe de rotation de la roue, dans lequel :
• les segments extérieurs (121) sont reliés au bord central (11) par deux bras (122) déformables, agencés pour encadrer les deux faces latérales (261), deux bras (122) étant connectés au segment extérieur (121) qu'ils relient de chaque côté dudit segment extérieur dans le sens circonférentiel, la patte (123) prolongeant ledit segment par le bord axialement intérieur de celui-ci,
• le bord central comporte des segments intérieurs (111) reliés chacun à deux bras (122) déformables, ceux-ci étant issus de segments extérieurs (121) différents, lesdits deux bras (122) étant connectés au segment extérieur (121) qu'ils relient de chaque côté dudit segment intérieur dans le sens circonférentiel.

3. Enjoliveur selon l'une des revendications 1 à 2, dans lequel les éléments de fixation sur la partie rigide de la roue sont des vis.

4. Enjoliveur selon l'une des revendications 1 à 3 dans lequel le cercle R₁ vaut au maximum 75% de R₂.

5. Enjoliveur selon l'une des revendications 4 dans lequel le cercle R₁ vaut au maximum 45% de R₂.

6. Ensemble comportant un enjoliveur (1) et une roue à siège flottant (2), ledit siège flottant étant destiné à recevoir un pneumatique, ladite roue (2) ayant un axe de rotation, ladite roue (2) comprenant une partie centrale (21) rigide comportant une portée de montage (22) et comprenant une partie périphérique (23; 123B) rigide, ladite partie centrale étant reliée à la partie périphérique de façon rigide, ladite partie périphérique ayant un centre de jante (24), le centre de jante étant prolongé axialement par des parties latérales de jante (251, 252), chaque partie latérale de jante comportant un siège de pneumatique (253) prolongé axialement vers l'extérieur par un rebord (254), au moins un des sièges de pneumatique(253) étant flottant radialement, ledit enjoliveur étant conforme à l'une des revendications 1 à 5.

## Patentansprüche

1. Radkappe (1) eines Rades (2) mit schwimmendem Sitz für einen Reifen, wobei das Rad durch das Zusammenfügen einer starren Radbasis (20) und zweier flexibler seitlicher Felgenteile (251, 252), die einen Reifensitz (253), der über ein Horn (254) verfügt, umfassen, gebildet ist, wobei die Radkappe Folgendes umfasst:
• einen zentralen Rand (11, 11B), der sich an einem Radius R₁ befindet und Elemente zur Befestigung an dem Rad umfasst,
• eine äußere Peripherie (12, 12B), die in einem Kreis mit einem Radius R₂ eingeschrieben ist, **dadurch gekennzeichnet, dass** die äußere Peripherie (12, 12B) dazu eingerichtet ist, fähig zu sein, mit einem funktionellen Spiel "J" in Bezug auf ein seitliches Felgenteil (251) zusammenzuwirken, und dass:
• die äußere Peripherie (12, 12B) eine Vielzahl von Außensegmenten (121) umfasst, die Kreisbögen bilden, die auf einem zu dem zentralen Rand (11, 11B) radial außenliegenden Umkreis enthalten sind, wobei die Außensegmente (121) eine rotationssymmetrische Form aufweisen, die fähig ist, sich in der Montageposition quasi parallel zu der radial innenliegenden Fläche des axial außenliegenden seitlichen Felgenteils (251), gegenüber dem Horn (254), zu befinden, wobei die Außensegmente (121) radial bewegbar sind,
• die Außensegmente (121) durch mindestens einen verformbaren Arm (122) mit dem zentralen Rand (11) verbunden sind,
• die Außensegmente (121) durch verformbare Laschen (123) axial nach innen verlängert sind, wobei die Laschen (123) Elemente zur Befestigung (10, 10B) an dem starren Teil des Rades umfassen,
und dass der zentrale Rand (11, 11B) und die äußere Peripherie (12, 12B) mindestens einer der Ausgestaltungen entsprechen, die aus den folgenden zwei Ausgestaltungen gewählt werden:
• die äußere Peripherie (12, 12B) ist von dem nächstgelegenen der Elemente zur Befestigung an dem Rad um einen Wert größer als 10 ö des Radius R₂ axial beabstandet,
• der Kreis mit dem Radius R₁ beträgt maximal 90 ö des Radius R₂.

2. Radkappe nach Anspruch 1, für ein Rad mit schwimmendem Sitz, dessen starrer Teil eine Vielzahl von Speichen (26) umfasst, die den starren zentralen Teil (21) und den starren Peripherieteil (23) verbinden, wobei jede Speiche (26) zwei Seitenflächen (261) aufweist, die zueinander im Wesentlichen parallel und zu einer Ebene, die die Drehachse des Rades enthält, im Wesentlichen parallel sind, wobei:
• die Außensegmente (121) mit dem zentralen Rand (11) durch zwei verformbare Arme (122) verbunden sind, die dazu eingerichtet sind, die zwei Seitenflächen (261) einzufassen, wobei zwei Arme (122) an das Außensegment (121), welches sie verbinden, auf jeder Seite des Außensegments in Umfangsrichtung angeschlossen sind, wobei die Lasche (123) das Segment an dessen axial innenliegendem Rand verlängert,
• der zentrale Rand Innensegmente (111) umfasst, die jeweils mit zwei verformbaren Armen (122) verbunden sind, wobei diese zu unterschiedlichen Außensegmenten (121) gehören, wobei die zwei Arme (122) an das Außensegment (121), das sie verbinden, auf jeder Seite des Innensegments in Umfangsrichtung angeschlossen sind.

3. Radkappe nach einem der Ansprüche 1 bis 2, wobei die Elemente zur Befestigung an dem starren Teil des Rades Schrauben sind.

4. Radkappe nach einem der Ansprüche 1 bis 3, wobei der Kreis R₁ maximal 75 ö von R₂ beträgt.

5. Radkappe nach einem der Ansprüche 4, wobei der Kreis R₁ maximal 45 ö von R₂ beträgt.

6. Anordnung, die eine Radkappe (1) und ein Rad mit schwimmendem Sitz (2) umfasst, wobei der schwimmende Sitz dazu bestimmt ist, einen Reifen aufzunehmen, wobei das Rad (2) eine Drehachse aufweist, wobei das Rad (2) einen starren zentralen Teil (21) beinhaltet, der eine Montagefläche (22) umfasst, und einen starren Peripherieteil (23; 123B) beinhaltet, wobei der zentrale Teil mit dem Peripherieteil starr verbunden ist, wobei der Peripherieteil eine Felgenmitte (24) aufweist, wobei die Felgenmitte durch seitliche Felgenteile (251, 252) axial verlängert ist, wobei jedes seitliche Felgenteil einen Reifensitz (253) umfasst, der durch ein Horn (254) axial nach außen verlängert ist, wobei mindestens einer der Reifensitze (253) radial schwimmend ist, wobei die Radkappe einem der Ansprüche 1 bis 5 entspricht.

## Claims

1. Hubcap (1) for a wheel (2) with a floating seat for a tyre, the wheel being formed by the assembly of a rigid wheel base (20) and two flexible rim lateral parts (251, 252) comprising a tyre seat (253) provided with a flange (254), said hubcap comprising:
• a central edge (11, 11B) situated at a radius R₁ and comprising fixing elements for securing to the wheel,
• an exterior periphery (12, 12B) inscribed on a circle of radius R₂, **characterized in that** the exterior periphery (12, 12B) is arranged so as to be able to collaborate with a functional clearance "J" with respect to a rim lateral part (251) and **in that**:
• the exterior periphery (12, 12B) comprises a plurality of exterior segments (121) forming arcs of circles contained on a circle circumscribed radially to the outside of the central edge (11, 11B), said exterior segments (121) have a shape of revolution capable, in the mounted position, of being almost parallel to the radially interior face of said rim lateral part (251) axially on the outside, facing the flange (254), the exterior segments (121) are radially displaceable,
• the exterior segments (121) are connected to the central edge (11) by at least one deformable arm (122),
• the exterior segments (121) are extended axially inwards by deformable tabs (123), the tabs (123) comprising fixing elements (10, 10B) for securing to the rigid part of the wheel,
and **in that** said central edge (11, 11B) and said exterior periphery (12, 12B) are in accordance with at least one of the following two arrangements:
• the exterior periphery (12, 12B) is axially distant from the closest of the fixing elements for securing to the wheel by a value exceeding 10% of the radius R₂,
• the circle of radius R₁ represents at most 90% of radius R₂.

2. Hubcap according to Claim 1 for a floating-seat wheel, the rigid part of which comprises a plurality of spokes (26) connecting the rigid central part (21) and the rigid peripheral part (23), each spoke (26) having two lateral faces (261) which are substantially parallel to each other and substantially parallel to a plane containing the axis of rotation of the wheel, in which:
• the exterior segments (121) are connected to the central edge (11) by two deformable arms (122), arranged to flank the two lateral faces (261), two arms (122) being connected to the exterior segment (121) that they connect on each side of said exterior segment in the circumferential direction, the tab (123) extending said segment via the axially interior edge thereof,
• the central edge comprises interior segments (111) each connected to two deformable arms (122), the latter coming from different exterior segments (121), said two arms (122) being connected to the exterior segment (121) that they connect on each side of said interior segment in the circumferential direction.

3. Hubcap according to one of Claims 1 to 2, in which the fixing elements for securing to the rigid part of the wheel are screws.

4. Hubcap according to one of Claims 1 to 3, in which the circle R₁ represents at most 75% of R₂.

5. Hubcap according to one of Claims 4, in which the circle R₁ represents at most 45% of R₂.

6. Assembly comprising a hubcap (1) and a floating-seat wheel (2), said floating seat being intended to receive a tyre, said wheel (2) having an axis of rotation, said wheel (2) comprising a rigid central part (21) having a mounting bearing surface (22) and comprising a rigid peripheral part (23; 123B), said central part being rigidly connected to the peripheral part, said peripheral part having a rim centre (24), the rim centre being extended axially by rim lateral parts (251, 252), each rim lateral part comprising a tyre seat (253) extended axially outwards by a flange (254), at least one of the tyre seats (253) being radially floating, said hubcap being in accordance with one of Claims 1 to 5.
